# EUROPÄISCHE PATENTSCHRIFT

(11) **EP 3 841 021 B1**
(45) Veröffentlichungstag und Bekanntmachung des Hinweises auf die Patenterteilung: **14.06.2023**
(21) Anmeldenummer: 19755270.6
(22) Anmeldetag: 30.07.2019
(51) Int. Cl.: B64F 1/04, B64F 5/10, B64F 5/40, B64F 5/50, B64F 5/60, B64F 1/10

(54) **VORRICHTUNG ZUR LAGERUNG EINES FLUGZEUGRUMPFS**
APPARATUS FOR SUPPORTING AN AIRCRAFT FUSELAGE
DISPOSITIF DE SUPPORT D'UN FUSELAGE D'AVION

(30) Priorität: 20.08.2018 AT 507042018
(43) Veröffentlichungstag der Anmeldung: 30.06.2021
(73) Patentinhaber: Mühlfellner, Andreas, 8502 Lannach (AT); Mühlfellner, Walter, 8073 Feldkirchen (AT)
(72) Erfinder: Mühlfellner, Andreas, 8502 Lannach (AT); Mühlfellner, Walter, 8073 Feldkirchen (AT)
(74) Vertreter: Röggla, Harald
(86) Internationale Anmeldenummer: PCT/AT2019/060246
(87) Internationale Veröffentlichungsnummer: WO 2020/037341

(56) Entgegenhaltungen:
- EP-A1- 2 974 905
- DE-A1-102007 052 277
- DE-A1-102007 052 277

## Beschreibung

Die Erfindung betrifft eine Vorrichtung zur Lagerung eines Flugzeugrumpfs mit zumindest zwei im Wesentlichen parallel zueinander angeordneten Auflagebändern.

Des Weiteren betrifft die Erfindung eine Transportvorrichtung mit einem Fahrwerk zum Transport von Flugzeugen.

Im Luftverkehr besteht bei jeder Landung eines Flugzeugs ein Risiko, dass das Flugzeug beispielsweise durch ein teilweises oder vollständiges Versagen des Fahrwerks verunfallt. Dies hat in der Regel zur Folge, dass das Flugzeug auf dem Rumpf landet und auf der Landebahn beziehungsweise in deren unmittelbarer Umgebung zum Stillstand kommt. Auch bei Notlandungen auf unbefestigtem Untergrund besteht ein hohes Risiko, dass das Fahrwerk den hierbei auftretenden Belastungen nicht standhält und versagt. Infolgedessen verbleibt das verunfallte Flugzeug an der Unfallstelle kann aufgrund des beschädigten Fahrwerks, und in der Regel weiteren Beschädigungen an anderen Bauteilen, nicht mehr wie üblich abgeschleppt werden. Dies führt dazu, dass der Luftverkehr beeinträchtigt wird, da beispielsweise zumindest jene Landebahn auf welcher, oder in deren Umgebung, das beschädigte Flugzeug zum Stillstand gekommen ist bis zu dessen Abtransport nicht mehr verwendet werden kann.

Im Stand der Technik sind für den Abtransport von verunfallten Flugzeugen unterschiedliche Systeme bekannt. In der Regel verläuft eine Bergung des beschädigten Flugzeugs in zwei Phasen, wobei das Flugzeug in der ersten Phase mittels einer Hebevorrichtung angehoben wird. In der zweiten Phase wird das Flugzeug auf einer Transportvorrichtung gelagert und mittels dieser abtransportiert. Transportvorrichtungen aus dem Stand der Technik umfassen hierzu verschiedene Vorrichtungen zur Lagerung des Flugzeugrumpfs.

EP 2 974 905 A1 offenbart eine Vorrichtung zum Transportieren von großen Lasten mit einer flexiblen Hebevorrichtung und einem Teleskoparm.

DE 28 45 268 A1 offenbart ein Transportfahrzeug für Flugzeuge mit einer Hubeinrichtung, welche mit einem Seilzug gespannt werden kann.

WO 2004/087459 A1 offenbart ein Bergungsfahrzeug mit einer Vorrichtung zur Lagerung eines Flugzeugrumpfs, wobei die Vorrichtung ein oder mehrere Kissen umfasst, welche unter dem Rumpf oder auch anderen Bauteilen des Flugzeugs, wie beispielsweise den Flügeln, positioniert werden. Bei einer Bergung werden die Kissen aufgeblasen und das Gewicht des Flugzeugs wird auf die Kissen verteilt.

DE 34 16 375 A1 offenbart eine Vorrichtung zum Bergen und Transportieren von Flugzeugen, welche ebenfalls aufblasbare Kissen verwendet.

DE 10 2007 052 277 A1 offenbart einen autonomen, motorisierten, ferngesteuerten Notlandungswagen, der mit einem Hauptmotor und Startraketen ausgestattet ist. Zudem weist der Notlandungswagen mehrere Stützen auf. Der Notlandungswagen ist dazu ausgebildet bei einer Notlandung eines Flugzeuges mit voll- oder teilweise eingefahrenem Fahrwerk seine Geschwindigkeit an die Geschwindigkeit des Flugzeuges anzupassen, und das Flugzeug bei der Landung aufzunehmen.

Derartige Vorrichtungen weisen den Nachteil auf, dass beim Aufblasen der Kissen das Risiko besteht eine ungleichmäßige Lastverteilung auf verschiedenen Komponenten des Flugzeugs zu erzeugen. Dies führt dazu, dass beispielsweise im Flugzeugrumpf Risse entstehen können, welche aufgrund der im modernen Flugzeugbau verwendeten Materialien nur schwer feststellbar und reparierbar sind. Hierdurch wird zudem ein möglicherweise bereits durch die Landung entstandener Schaden vergrößert. Zur Verminderung dieses Risikos werden oftmals Sensormatten zwischen den Kissen und dem Flugzeug positioniert, welche die momentane Belastung auf die Auflagefläche bestimmen. Nichtsdestotrotz birgt eine großflächige Auflage auf Kissen das Risiko Flugzeugteile zu belasten, welche nicht für die Aufnahme von hohen Kräften ausgelegt sind, und somit eine Beschädigung zu erzeugen. Flugzeugrümpfe bestehen aus einem Grundgerüst aus lastabtragenden Streben, zwischen welche Verkleidungsplatten montiert werden. Diese Verkleidungen können jedoch nur geringe Lasten aufnehmen. Bei einer Auflage auf Kissen werden diese Komponenten dennoch einer erhöhten Last ausgesetzt und somit das Risiko erhöht den Flugzeugrumpf weiter zu beschädigen.

Es ist die Aufgabe der vorliegenden Erfindung eine Vorrichtung zur Lagerung eines Flugzeugrumpfs zu bilden, welche die Nachteile des Standes der Technik vermeidet.

Erfindungsgemäß wird die vorliegende Aufgabe dadurch gelöst, dass die Vorrichtung einen Auflagekörper, zumindest zwei Bandspannvorrichtungen und zumindest zwei Zugkraftmessgeräte umfasst, wobei jedes der Auflagebänder mit jeweils einer Bandspannvorrichtung, jeweils einem Zugkraftmessgerät und beidseitig mit dem Auflagekörper verbunden ist, wobei der Auflagekörper ein offenes, rinnenförmiges Langprofil aufweist und die Auflagebänder jeweils das offene Langprofil des Auflagekörpers überspannen.

Die vorliegende Aufgabe der Erfindung wird des Weiteren durch eine Transportvorrichtung mit einem Fahrwerk zum Transport von Flugzeugen gelöst, wobei das Fahrwerk mit einer erfindungsgemäßen Vorrichtung zur Lagerung eines Flugzeugrumpfs verbunden ist.

Die erfindungsgemäße Vorrichtung zur Lagerung eines Flugzeugrumpfs umfasst zumindest zwei Auflagebänder, welche im Wesentlichen parallel zueinander angeordnet sind. Des Weiteren umfasst die Vorrichtung einen Auflagekörper, welcher ein offenes, rinnenförmiges Langprofil aufweist. Jedes der Auflagebänder ist mit jeweils einer Bandspannvorrichtung und jeweils einem Zugkraftmessgerät verbunden. Darüber hinaus sind die Auflagebänder beidseitig mit dem Auflagekörper verbunden und überspannen jeweils das offene Langprofil des Auflagekörpers. Der Flugzeugrumpf eines verunfallten Flugzeugs wird bei der Verwendung der erfindungsgemäßen Vorrichtung auf die Auflagebänder gelegt, wodurch die Auflagebänder gespannt werden. Die Bandspannung ist mittels der Bandspannvorrichtungen regulierbar und wird mittels der Zugkraftmessgeräte bestimmt. Die erfindungsgemäße Vorrichtung bietet den Vorteil, dass durch die Verwendung von zwei Auflagebändern zur Aufnahme des Flugzeugrumpfs die Möglichkeit bereitgestellt wird durch richtige Positionierung der Auflagebänder den Flugzeugrumpf jeweils nur in jenen Bereichen zu belasten, in welchen lastabtragenden Streben vorhanden sind. Hierdurch werden keine Komponenten des Flugzeugs belastet, welche nicht zur Aufnahme von Lasten ausgelegt sind und das Risiko für Beschädigungen wie beispielsweise Spannungsrissen verringert. Darüber hinaus stellt die Vorrichtung den Vorteil bereit durch eine Bestimmung der auf die Auflagebänder wirkenden Zugspannung mittels der Zugkraftmessgeräte die Belastung des Flugzeugrumpfs zu bestimmen und durch eine Veränderung der Bandspannung mittels der Bandspannvorrichtungen eine ungleiche Belastung der Auflagebänder und somit des Flugzeugrumpfs zu korrigieren. Hierdurch wird das Beschädigungsrisiko weiter vermindert.

Gemäß einer bevorzugten Ausführungsform der erfindungsgemäßen Vorrichtung sind die Auflagebänder lösbar mit dem Auflagekörper verbunden und entlang einer Längsachse des Auflagekörpers versetzbar. Hierdurch wird der Vorteil erreicht, dass ein Abstand der Auflagebänder besonders einfach und rasch an unterschiedliche Flugzeugtypen angepasst, und eine gerade Auflage der Auflagebänder an dem Flugzeugrumpf gewährleistet werden kann. Ebenso wäre es möglich, dass jeweils ein Auflageband mit seiner Bandspannvorrichtung und seinem Zugkraftmessgerät eine mechanische Einheit bildet, die auf dem Auflagekörper verschiebbar oder versetzbar zum benachbarten Auflageband angeordnet ist, um die Auflagepunkte an die Abstände der Streben des Rumpfes anzupassen.

Vorzugsweise sind die Bandspannvorrichtungen als Hydraulikzylinder ausgebildet. Dies ermöglicht die Verwendung von am Markt weit verbreiteten und in unterschiedlichsten Spezifikationen verfügbaren Bauteilen zur Spannung der Auflagebänder.

Gemäß der bevorzugten Ausführungsform der erfindungsgemäßen Vorrichtung weist der Auflagekörper eine Mehrzahl an Rollen an jeder Rinnenschulter des Langprofils auf. Jedes der Auflagebänder verläuft über jeweils eine Rolle an jeder Rinnenschulter. Die Rollen an den Rinnenschultern erlauben eine Bewegung der Auflagebänder bei Belastung und verhindern eine Beschädigung der Auflagebänder durch Reibung mit dem Auflagekörper.

Der Auflagekörper ist vorzugsweise entlang der Längsachse des Auflagekörpers kippbar gelagert. Hierdurch wird der Vorteil erreicht, dass der Auflagekörper bei der Aufnahme eines Flugzeugrumpfs an dem Flugzeugrumpf ausgerichtet werden kann, wodurch ein etwaiges verkipptes Auflegen des Flugzeugrumpfs ausgeglichen wird. Des Weiteren bietet die Kippbarkeit des Auflagekörpers den Vorteil, dass eine Unebenheit eines Untergrundes unter der Vorrichtung ausgeglichen werden kann.

Weitere vorteilhafte Ausgestaltungen der erfindungsgemäßen Vorrichtung zur Lagerung eines Flugzeugrumpfs und der Transportvorrichtung werden in nachfolgend anhand der Figuren erläutert.
Figur 1a zeigt eine erfindungsgemäße Vorrichtung zur Lagerung eines Flugzeugrumpfs in einer perspektivischen Darstellung.
Figur 1b zeigt die erfindungsgemäße Vorrichtung in einer perspektivischen Darstellung unter einem weiteren Betrachtungswinkel.
Figur 2 zeigt die erfindungsgemäße Vorrichtung in einer Frontalansicht.
Figur 3 zeigt die erfindungsgemäße Vorrichtung in einer Seitenansicht.
Figur 4 zeigt die erfindungsgemäße Vorrichtung in einer Draufsicht.
Figur 5 zeigt die erfindungsgemäße Vorrichtung in Ansicht von unten.

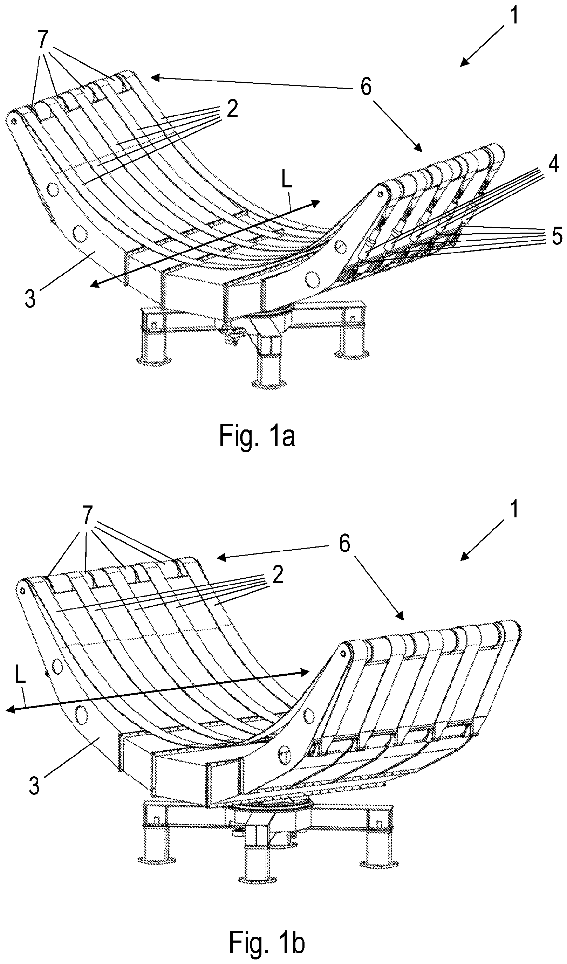

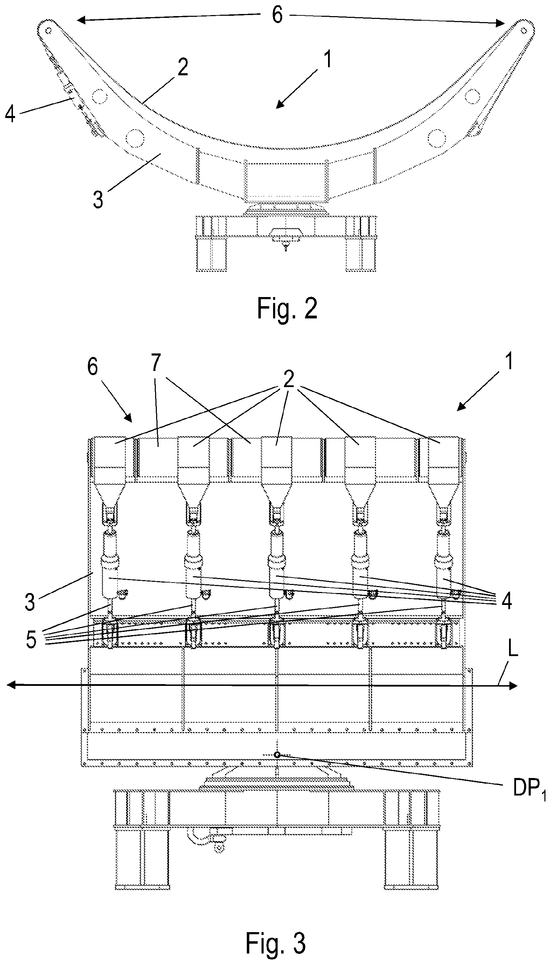

Figur 1a und Figur 1b zeigen perspektivische Darstellungen einer erfindungsgemäßen Vorrichtung 1 zur Lagerung eines Flugzeugrumpfs in einer bevorzugten Ausführungsform mit fünf Auflagebändern 2 aus zwei verschiedenen Ansichtswinkeln. Die erfindungsgemäße Vorrichtung 1 umfasst zumindest zwei Auflagebänder 2, welche im Wesentlichen parallel zueinander angeordnet sind, wobei auch zehn, 15 oder 20 Auflagebänder 2 vorgesehen sein können. Des Weiteren umfasst die Vorrichtung 1 einen Auflagekörper 3, zumindest zwei Bandspannvorrichtungen 4 und zumindest zwei Zugkraftmessgeräte 5. Jedes der Auflagebänder 2 ist mit jeweils einer Bandspannvorrichtung 4, jeweils einem Zugkraftmessgerät 5 und beidseitig mit dem Auflagekörper 3 verbunden. Die in den Figuren dargestellte erfindungsgemäße Vorrichtung 1 umfasst jeweils fünf Bandspannvorrichtungen 4 und fünf Zugkraftmessgeräte 5. Der Auflagekörper 3 weist ein offenes, rinnenförmiges Langprofil auf, und die Auflagebänder 2 überspannen das offene Langprofil des Auflagekörpers 3. Das rinnenförmige Langprofil des Auflagekörpers 3 kann unterschiedliche Querschnittsformen, wie beispielsweise eine Dreiecksform oder eine Rechtecksform, aufweisen. Der in den Figuren dargestellte Auflagekörper 3 der bevorzugten Ausführungsform der erfindungsgemäßen Vorrichtung 1 weist ein parabolisch geformtes rinnenförmiges Langprofil auf, wie in Figur 2 in einer Frontalansicht ersichtlich. Die Auflagebänder 2 überspannen das Langprofil des Auflagekörpers 3 im Wesentlichen quer zum rinnenförmigen Langprofil. Die Auflagebänder 2 verlaufen von einer Rinnenschulter 6 zu der anderen Rinnenschulter 6 des Langprofils des Auflagekörpers 3. Die erfindungsgemäße Vorrichtung 1 stellt den Vorteil bereit, dass nur lastabtragende Bauteile des

Flugzeugs im Zuge einer Lagerung auf der erfindungsgemäßen Vorrichtung 1 belastet werden. Hierdurch wird das Risiko von Beschädigungen an dem Flugzeug minimiert. Die Bandspannvorrichtungen 4 sind vorzugsweise jeweils an einem Ende jedes Auflagebands 2 angeordnet. Die Bandspannvorrichtungen 4 sind zur stufenlosen Krafteinleitung zur Vorspannung der Auflagebänder 2 vorgesehen. In der bevorzugten Ausführungsvariante der erfindungsgemäßen Vorrichtung 1 sind die Bandspannvorrichtungen 4 als Hydraulikzylinder ausgeführt. Hierdurch wird der Vorteil erreicht, dass vielfach erprobte und einfach dimensionierbare Komponenten als Bandspannvorrichtungen 4 eingesetzt werden. In alternativen Ausführungsvarianten können die Bandspannvorrichtungen 4 auch als Pneumatikzylinder oder elektrisch angetriebene Seilrollen ausgeführt sein. Die Zugkraftmessgeräte 5 sind vorzugsweise als Zugmessbolzen ausgeführt und entweder, wie in den Figuren dargestellt, ebenfalls an dem Ende der Auflagebänder 2, an welchem die Bandspannvorrichtungen 4 angeordnet sind, oder an den gegenüberliegenden Enden der Auflagebänder 2 angeordnet. Weitere Ausführungsformen für die Bandspannvorrichtungen 4 und die Zugkraftmessgeräte 5 ergeben sich für den Fachmann aus diesen beispielhaften Verweisen.

Wie in Figur 3 dargestellt sind die Auflagebänder 2 vorzugsweise lösbar mit dem Auflagekörper 3 verbunden und entlang einer Längsachse L des Auflagekörpers 3 an dem Auflagekörper 3 befestigbar. Hierdurch wird der Vorteil erreicht, dass die erfindungsgemäße Vorrichtung 1 an unterschiedliche Flugzeugtypen anpassbar ist. Gemäß der in Figur 2 dargestellten bevorzugten Ausführungsvariante der erfindungsgemäßen Vorrichtung 1 sind die Auflagebänder 2 mittels lösbarer Schraubverbindungen mit dem Auflagekörper 3 verbunden. In alternativen Ausführungsvarianten können beispielsweise auch Klemmvorrichtungen oder Einhakvorrichtungen vorgesehen sein. Weitere lösbare Befestigungsmethoden ergeben sich für den Fachmann aus diesem beispielhaften Verweis.

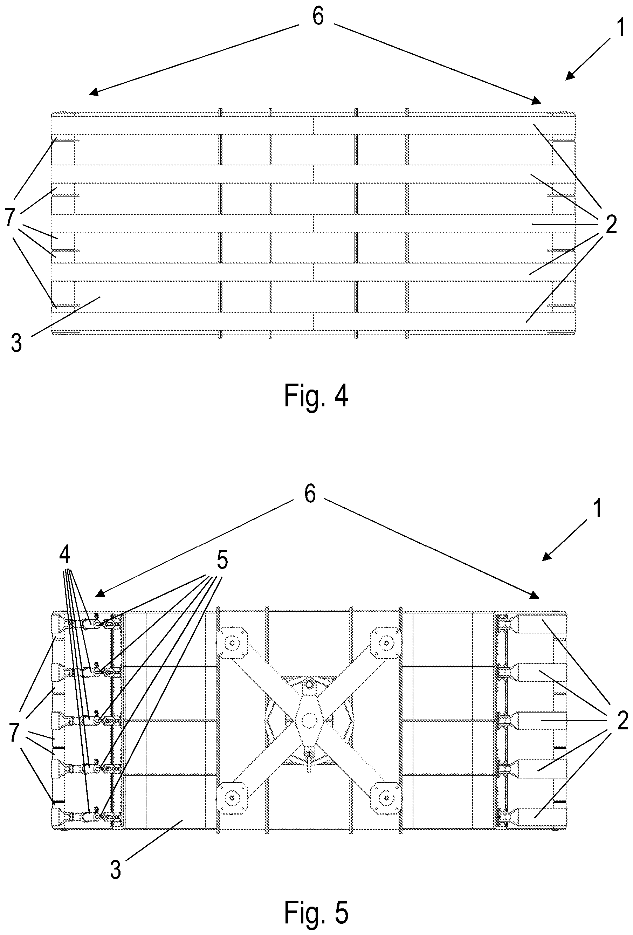

Figur 4 zeigt die erfindungsgemäße Vorrichtung 1 in einer Ansicht von oben und Figur 5 zeigt die erfindungsgemäße Vorrichtung 1 in einer Ansicht von unten, wobei gut ersichtlich ist, dass die Vorrichtung 1 in der bevorzugten Ausführungsform eine Mehrzahl an Rollen 7 an jeder Rinnenschulter 6 des Langprofils des Auflagekörpers 3 aufweist und jedes der Auflagebänder 2 über jeweils eine Rolle 7 an jeder Rinnenschulter 6 verläuft. In einer alternativen Ausführungsvariante kann jedes der Auflagebänder 2 auch über mehrere, beispielsweise kleinere, Rollen 7 an jeder Rinnenschulter 6 verlaufen. Hierdurch wird der Vorteil erreicht, dass ein Scheuern der Auflagebänder 2 an dem Auflagekörper 3 verhindert, und die Lebensdauer der erfindungsgemäßen Vorrichtung 1 vergrößert wird.

Vorzugsweise ist der Auflagekörper 3 entlang der Längsachse L des Auflagekörpers 3 kippbar gelagert. Hierbei wird der Auflagekörper 3 um den in Figur 3 dargestellten Drehpunkt DP₁ entlang der Längsachse L geneigt. Der Auflagekörper 3 kann zusätzlich auch quer der Längsachse L des Auflagekörpers mittels eines Drehkranzes kippbar gelagert sein. Hierdurch wird der Vorteil erreicht, dass eine Neigung des Auflagekörpers 3 bei der Aufnahme eines Flugzeugrumpfs an den Flugzeugrumpf angepasst wird, wodurch ein etwaiges verkipptes Auflegen des Flugzeugrumpfs und eine dadurch erzeugte ungleiche Lastverteilung verhindert wird. Des Weiteren bietet die Kippbarkeit des Auflagekörpers 3 den Vorteil, dass eine Unebenheit eines Untergrundes unter der Vorrichtung 1 ausgeglichen werden kann.

Bei der Aufnahme eines Flugzeugrumpfs durch die erfindungsgemäße Vorrichtung 1 wird eine Bandspannvorrichtung 4 eines entlang der Längsachse L außenliegenden Auflagebands 2 blockiert, sodass dieses unter Last nicht oder nur infolge der Flexibilität des Auflagebandes 2 nachgibt. Beim Auflegen des Flugzeugrumpfs auf die erfindungsgemäße Vorrichtung 1 richtet sich die Vorrichtung 1 mittels der kippbaren Lagerung entlang der Längsachse L automatisch parallel zu dem Flugzeugrumpf aus. In weiterer Folge wird die Blockade der Bandspannvorrichtung 4 gelöst, und die Last des Flugzeugrumpfs verteilt sich gleichmäßig auf alle Auflagebänder 2.

Die erfindungsgemäße Vorrichtung 1 weist weiters eine in den Figuren nicht dargestellte Speichereinheit auf, in der die während der Bergung des Flugzeugs mit den Zugmessgeräten 5 gemessenen Messwerte gespeichert werden. Hierdurch ist der Vorteil erhalten, dass nach der Bergung anhand der Messwerte nachgeprüft werden kann welche Kräfte auf den Flugzeugrumpf eingewirkt haben um festzustellen, ob eine bestimmte Beschädigung des Rumpfs bei dem Unfall oder durch die Bergung zustande gekommen ist. Hierdurch wird die Aufklärung des Unfalls erleichtert. Besonders vorteilhaft ist es, wenn die Messwerte der Zugmessgeräte 5 den einzelnen Auflagebändern 2 und deren Auflagepositionen auf dem Rumpf des Flugzeugs zugeordnet gespeichert werden. Hierdurch ist eine genaue Zuordnung der Kräfte auf den Rumpf zu einzelnen Beschädigungen des Rumpfs ermöglicht.

Die erfindungsgemäße Vorrichtung 1 zur Lagerung eines Flugzeugrumpfs ist Teil einer Transportvorrichtung für Flugzeuge. Die Transportvorrichtung für Flugzeuge weist eine oder mehrere erfindungsgemäße Vorrichtungen 1 auf, welche mit einem oder mehreren Fahrwerken versehen sind, welche in den Figuren nicht dargestellt sind. Hierdurch wird der Vorteil erreicht, dass die erfindungsgemäße Vorrichtung 1 zum Abtransport eines beschädigten Flugzeugs, beispielsweise in einen Hangar zur Reparatur, verwendet werden kann. Als Fahrwerk kann beispielsweise ein Schwerlasttransporter dienen.

## Patentansprüche

1. Vorrichtung (1) zur Lagerung eines Flugzeugrumpfs mit zumindest zwei im Wesentlichen parallel zueinander angeordneten Auflagebändern (2), wobei die Vorrichtung (1) einen Auflagekörper (3) mit einem offenen, rinnenförmigen Langprofil aufweist, **dadurch gekennzeichnet, dass** die Vorrichtung (1) zumindest zwei Bandspannvorrichtungen (4) und zumindest zwei Zugkraftmessgeräte (5) umfasst, wobei jedes der Auflagebänder (2) mit jeweils einer Bandspannvorrichtung (4), jeweils einem Zugkraftmessgerät (5) und beidseitig mit dem Auflagekörper (3) verbunden ist, wobei die Auflagebänder (2) jeweils das offene Langprofil des Auflagekörpers (3) überspannen.

2. Vorrichtung (1) gemäß Anspruch 1, **dadurch gekennzeichnet, dass** die Auflagebänder (2) lösbar mit dem Auflagekörper (3) verbunden, und entlang einer Längsachse (L) des Auflagekörpers (3) versetzbar sind.

3. Vorrichtung (1) gemäß einem der Ansprüche 1 oder 2, **dadurch gekennzeichnet, dass** die Bandspannvorrichtungen (4) als Hydraulikzylinder ausgebildet sind.

4. Vorrichtung (1) gemäß einem der Ansprüche 1 bis 3, **dadurch gekennzeichnet, dass** der Auflagekörper (3) eine Mehrzahl an Rollen (7) an jeder Rinnenschulter (6) des Langprofils aufweist und jedes der Auflagebänder (2) über jeweils eine Rolle (7) an jeder Rinnenschulter (6) verläuft.

5. Vorrichtung (1) gemäß einem der Ansprüche 1 bis 4, **dadurch gekennzeichnet, dass** der Auflagekörper (3) entlang einer Längsachse (L) des Auflagekörpers (3) kippbar gelagert ist.

6. Vorrichtung (1) gemäß einem der Ansprüche 1 bis 4, **dadurch gekennzeichnet, dass** eine Speichereinheit vorgesehen ist, in der die während der Bergung des Flugzeugs mit den Zugkraftmessgeräten (5) gemessenen Messwerte gespeichert werden.

7. Vorrichtung (1) gemäß Anspruch 6, **dadurch gekennzeichnet, dass** die Messwerte der Zugkraftmessgeräte (5) den einzelnen Auflagebändern (2) und deren Auflagepositionen auf dem Rumpf des Flugzeugs zugeordnet gespeichert werden.

8. Transportvorrichtung mit einem Fahrwerk zum Transport von Flugzeugen, **dadurch gekennzeichnet, dass** das Fahrwerk mit einer Vorrichtung (1) gemäß einem der Ansprüche 1 bis 7 verbunden ist.

## Claims

1. An apparatus (1) for supporting an aircraft fuselage having at least two support belts (2) arranged essentially in parallel to one another, wherein the apparatus (1) has a support body (3) having an open and groove-like longitudinal profile, **characterized in that** the apparatus (1) comprises at least two belt tensioning devices (4) and at least two traction measuring devices (5), wherein each of the support belts (2) is connected to respectively one belt tensioning device (4), respectively one traction measuring device (5) and on both sides to the support body (3), wherein the support belts (2) each span the open longitudinal profile of the support body (3).

2. An apparatus (1) according to claim 1, **characterized in that** the support belts (2) are releasably connected to the support body (3) and may be displaced along a longitudinal axis (L) of the support body (3).

3. An apparatus (1) according to claim 1 or 2, **characterized in that** the belt tensioning devices (4) are configured as hydraulic cylinders.

4. An apparatus (1) according to any of the claims 1 to 3, **characterized in that** the support body (3) has a plurality of rolls (7) at each groove shoulder (6) of the longitudinal profile and that each of the support belts (2) runs across respectively one roll (7) at each groove shoulder (6).

5. An apparatus (1) according to any of the claims 1 to 4, **characterized in that** the support body (3) is mounted to be tilted along a longitudinal axis (L) of the support body (3).

6. An apparatus (1) according to any of the claims 1 to 4, **characterized in that** there is provided a storage unit, in which the values measured during the recovery of the aircraft using the traction measuring devices (5) are being stored.

7. An apparatus (1) according to claim 6, **characterized in that** the measured values of the traction measuring devices (5) are stored assigned to the individual support belts (2) and the support positions thereof on the fuselage of the aircraft.

8. A transport apparatus having a landing gear for transporting aircrafts, **characterized in that** the landing gear is connected to an apparatus (1) according to any of the claims 1 to 7.

## Revendications

1. Dispositif (1) de support d'un fuselage d'avion avec au moins deux bandes d'appui (2) agencées sensiblement parallèlement entre elles, lequel dispositif (1) présente un corps d'appui (3) avec un profil long ouvert en forme de gouttière, **caractérisé en ce que** ce dispositif (1) comporte au moins deux dispositifs de tension de bande (4) et au moins deux appareils de mesure de force de traction (5), chacune des bandes d'appui (2) étant reliée à un dispositif de tension de bande (4), à un appareil de mesure de force de traction (5) et de chaque côté avec le corps d'appui (3), les bandes d'appui (2) recouvrant chacune le corps d'appui (3).

2. Dispositif (1) selon la revendication 1, **caractérisé en ce que** les bandes d'appui (2) sont reliées de façon détachable avec le corps d'appui (3) et déplaçables le long d'un axe longitudinal (L) du corps d'appui (3).

3. Dispositif (1) selon une des revendications 1 ou 2, **caractérisé en ce que** les dispositifs de tension de bande (4) sont configurés comme des vérins hydrauliques.

4. Dispositif (1) selon une des revendications 1 à 3, **caractérisé en ce que** le corps d'appui (3) comporte une pluralité de rouleaux (7) au niveau de chaque épaulement de gorge (6) du profil long et que chacune des bandes d'appui (2) court au-dessus d'un rouleau (7) au niveau de chaque épaulement de gorge (6).

5. Dispositif (1) selon une des revendications 1 à 4, **caractérisé en ce que** le corps d'appui (3) est monté de façon à pouvoir basculer le long d'un axe longitudinal (L) du corps d'appui (3).

6. Dispositif (1) selon une des revendications 1 à 4, **caractérisé en ce qu'**est prévue une unité de mémorisation dans laquelle les valeurs de mesure mesurées avec les appareils de mesure de force de traction (5) pendant la récupération de l'avion sont mémorisées.

7. Dispositif (1) selon la revendication 6, **caractérisé en ce que** les valeurs de mesure des appareils de mesure de force de traction (5) sont mémorisées en étant associées aux différentes bandes d'appui (2) et à leurs positions d'appui sur le fuselage de l'avion.

8. Dispositif de transport avec un train de roulement pour le transport d'avions, **caractérisé en ce que** le train de roulement est relié avec un dispositif (1) selon les revendications 1 à 7.
